# EUROPÄISCHE PATENTSCHRIFT

(11) **EP 1 910 807 B1**
(45) Veröffentlichungstag und Bekanntmachung des Hinweises auf die Patenterteilung: **02.12.2009**
(21) Anmeldenummer: 06754713.3
(22) Anmeldetag: 12.07.2006
(51) Int. Cl.: G01N 21/59

(54) **VORRICHTUNG FÜR DIE ANALYSE ODER ABSORPTIONSMESSUNG AN EINER KLEINEN FLÜSSIGKEITSMENGE**
DEVICE FOR ANALYSIS OR ABSORPTION MEASUREMENT ON A SMALL AMOUNT OF LIQUID
DISPOSITIF D'ANALYSE OU DE MESURE D'ABSORPTION D'UN PETIT VOLUME DE LIQUIDE

(30) Priorität: 05.08.2005 DE 102005036898
(43) Veröffentlichungstag der Anmeldung: 16.04.2008
(73) Patentinhaber: Hellma GmbH & Co. KG, 79379 Müllheim (DE); Sahiri, Thomas, Calabasas, CA 91302 (US)
(72) Erfinder: SAHIRI, Thomas, Calabasas, CA 91302 (US); KÄNDLER, Holm, 79424 Auggen (DE)
(74) Vertreter: Maucher, Wolfgang
(86) Internationale Anmeldenummer: PCT/EP2006/006808
(87) Internationale Veröffentlichungsnummer: WO 2007/017035

(56) Entgegenhaltungen:
- EP-A1- 0 660 106
- DE-A1-102004 023 178
- DE-U1- 9 403 540
- US-A- 4 707 134
- US-A- 5 185 834
- US-A- 5 311 283
- US-A1- 2002 024 018

## Beschreibung

Die Erfindung betrifft eine Vorrichtung für die Analyse oder Absorptionsmessung an einer kleinen Menge, beispielsweise an einem Tropfen, eines flüssigen Mediums mit Hilfe von Licht, das durch das Medium geführt ist und danach fotometrisch, spektralfotometisch, fluorimetrisch oder spektralfluorimetrisch detektierbar oder analysierbar ist, wobei die Vorrichtung eine in Gebrauchsstellung obere flächige Aufnahmestelle zum Aufbringen oder Auftropfen des Mediums, einen in Gebrauchsstellung unterhalb der Aufnahmestelle befindlichen Lichteintritt in ihr Gehäuse und eine im Strahlengang hinter dem Lichteintritt befindliche erste Einrichtung zur Umlenkung des Lichts nach oben zu der Aufnahmestelle und einen oberhalb der Aufnahmestelle lösbar anbringbaren Reflektor aufweist, der in seiner Gebrauchsstellung einen definierten Abstand von der Aufnahmestelle hat und zumindest im Bereich des Lichtdurchganges von dem Medium ausgefüllt oder ausfüllbar ist, wobei eine zweite Einrichtung zum Umlenken des von dem Reflektor kommenden Lichts zu einem Detektor vorgesehen ist.

Eine derartige Vorrichtung ist in der deutschen Patentanmeldung DE 10 2004 023 178.8 beschrieben und hat sich in der Praxis bewährt. Es hat sich jedoch gezeigt, dass durch die dabei vorgesehene Lichtführung, bei welcher die optische Achse des Lichtstrahls rechtwinklig zu ihrer am Eintritt in die Vorrichtung vorgesehenen Richtung nach oben umgelenkt und danach zu der eigentlichen Messstelle hin geführt wird, eine für manche Anwendungsfälle ungünstige Bauhöhe entsteht.

Es besteht deshalb die Aufgabe, eine Vorrichtung der eingangs definierten Art zu schaffen, bei welcher deren Vorteile, kleine Probemengen eines flüssigen Mediums auf einfache Weise an einer Messstelle platzieren und nach der Messung eine zuverlässige und einfache Reinigung durchführen zu können, erhalten bleiben und dennoch die Bauhöhe verringert sein kann.

Zur Lösung dieser Aufgabe ist bei der eingangs definierten Vorrichtung vorgesehen, dass die am Lichteintritt angeordnete erste Einrichtung zum Umlenken des Lichtstrahls so ausgebildet ist, dass die dadurch bewirkte Richtung der optischen Achse des umgelenkten Lichtstrahls aufwärts und schräg zur Mitte der Vorrichtung hin orientiert und die Schrägstellung der optischen Achse dabei gegenüber der Vorrichtungsmitte so angeordnet ist, dass die optische Achse des Lichtstrahls oder Lichtstrahlbündels ohne oder mit Hilfe wenigstens eines optischen Elements auf die Stelle des Reflektors gerichtet ist, durch welche die Längsmitte zwischen Lichteintritt und Lichtaustritt der Vorrichtung verläuft.

Durch diese Schrägstellung des Lichtstrahlbündels durch seine erste Umlenkung ergibt sich eine deutlich geringere Bauhöhe, als wenn das Lichtstrahlbündel zunächst um 90° umgelenkt und erst dann zur Mitte der Vorrichtung und dem Reflektor hin orientiert wird, weil der Abstand des Reflektors vom Lichteingang geringer sein kann, um dennoch an der "lichten Stelle", nämlich an der Aufnahmestelle für die Probe, von dem Lichtstrahl.getroffen zu werden. Es bedurfte für diese Lösung der Erkenntnis, dass für die Umlenkung des Lichts nicht beispielsweise ein übliches, rechtwinkliges Prisma zu verwenden ist.

Besonders vorteilhaft ist es dabei, wenn der Lichtstrahl ohne optisches Element auf den Reflektor gelangt, weil dann der Aufwand für ein entsprechendes optisches Element, beispielsweise für einen Lichtleiter gespart werden kann.

Es ist aber auch möglich, dass als optisches Element für den umgelenkten Lichtstrahl zum Reflektor und dann vom Reflektor zum Lichtaustritt oder zu einer am Lichtaustritt befindlichen zweiten Einrichtung zum Umlenken des Lichtstrahls wenigstens eine Linse und/oder ein Prisma und/oder ein Lichtleiter vorgesehen sind. Eine solche Anordnung hat den Vorteil der besseren und genaueren Lichtführung.

Die schon erwähnte Alternative, wonach der Lichtstrahl von der Umlenkung aus ungeführt oder umgeleitet zu der Aufnahmestelle verläuft, kann zur Anwendung kommen, wenn er zunächst eine entsprechend geringe Divergenz oder Konvergenz hat oder wenigstens durch eine Sammellinse verläuft.

Es kann also zweckmäßig sein, wenn vor und/oder nach dem Eintritt des umgelenkten Lichtstrahls in den freien, von ihm durchsetzten Raum oder in einen Lichtleiter ein optisches Element als Fenster und/oder zur Bündelung des Lichtstrahls, beispielsweise eine Sammellinse vorgesehen ist.

Eine besonders vorteilhafte Ausgestaltung der Erfindung kann darin bestehen, dass die optische Achse des Lichtstrahls vor und/oder am Lichteintritt in das Gehäuse horizontal verläuft und dass die erste Einrichtung zum Umlenken des Lichtstrahls dessen optische Achse um weniger als 90°, insbesondere um etwa 80° bis 89°, vorzugsweise um etwa 85°, nach oben umlenkt. Anstelle der rechtwinkligen Umlenkung wird also gegenüber der Ursprungsrichtung der optischen Achse eine geringere Umlenkung durchgeführt, so dass der umgelenkte Strahl von der Umlenkstelle aus gegenüber der Längsmitte des Gehäuses der Vorrichtung schräg zu dieser Mitte hin gerichtet ist, um bei richtiger Ausrichtung der Umlenkung sowie gegebenenfalls mit Hilfe der schon erwähnte optischen Elemente praktisch unmittelbar auf die Stelle der Vorrichtung gerichtet zu sein, wo sich die Probe befindet und von dem Licht durchquert werden soll. Eine Umlenkung zunächst um einen rechten Winkel und dann eine weitere Ablenkung in Richtung zu der Probe mit einem entsprechenden Aufwand und einer auch daraus resultierenden größeren Bauhöhe werden vermieden.

Eine konstruktiv einfache Ausbildung der Erfindung kann vorgesehen, dass im Bereich des Lichteintritts als erste Einrichtung zur Umlenkung ein Umlenkprisma oder ein Umlenkspiegel vorgesehen ist, dessen Reflektionsfläche gegenüber der optischen Achse des einfallenden Lichtstrahls einen kleineren Winkel als 45° hat. Durch das Abweichen der Winkelstellung der Reflektionsfläche des Umlenkprismas oder des Umlenkspiegels von der üblichen, 45° betragenden Winkelstellung kann also die erfindungsgemäße von einem rechten Winkel abweichende Umlenkung des Lichtstrahls sehr einfach durchgeführt werden.

Dabei kann an dem Prisma diejenige Fläche, durch welche der Lichtstrahl nach seiner Umlenkung austritt, rechtwinklig zu diesem umgelenkten Lichtstrahl beziehungsweise zu seiner optischen Achse orientiert sein, um eine möglichst ungestörten Lichtaustritt zu ermöglichen, und mit einer am Lichteintritt befindlichen Prismenfläche einen kleineren Winkel als 90°, beispielsweise etwa 80° bis 89°, vorzugsweise etwa 85°, bilden. Somit kann beispielsweise die am Lichteintritt befindliche Prismenfläche genau vertikal verlaufen, um einen horizontal eintretenden "Lichtstrahl aufzunehmen, und dennoch kann durch dieses Prisma dann die erfindungsgemäße Umlenkung des Lichtstrahls um weniger als 90° bewirkt werden.

Am Lichtaustritt kann als zweite Einrichtung zur Umlenkung ein Umlenkprisma oder Umlenkspiegel vorgesehen sein und die zweite Einrichtung kann spiegelsymmetrisch zu der ersten Einrichtung zwischen Ein- und Austritt angeordnet sein, so dass die optische Achse eines von dem Reflektor ausgehenden, schräg verlaufenden Lichtstrahls am oder hinter dem Lichtaustritt horizontal verläuft.

Weitere Ausgestaltungen der Erfindung sind Gegenstand der Ansprüche 9 bis 18. Dabei handelt sich zum Teil um Merkmale, die auch bei der Vorrichtung gemäß DE 10 2004 023 178.8 vorgesehen sind und die dort geschilderten Vorteile haben. Besonders günstig ist dabei die Ausgestaltung gemäß Anspruch 11, durch welche die benötigte Menge der Probe besonders klein gehalten werden kann.

Vor allem bei Kombination einzelner oder mehrerer der vorbeschriebenen Merkmale und Maßnahmen ergibt sich eine Vorrichtung, bei welcher das zu untersuchende Medium auch in sehr kleinen und geringen Mengen auf eine im wesentlichen horizontale Fläche aufgebracht oder aufgetropft werden kann, wobei diese Aufnahmestelle von dem Licht dann bevorzugt zweimal dürchflossen wird. Dies kann auf dem Weg zu dem Reflektor und von dem Reflektor zurück geschehen, wobei sich dadurch eine entsprechend große Messstrecke ergibt. Gleichzeitig ist die gesamte Bauhöhe der Vorrichtung durch die geschickte Lichtführung, bei welcher der Lichtstrahl schon unmittelbar nach seinem Eintritt schräg in Richtung auf die Probe hin gerichtet wird, vermindert.

Da das Medium auf eine obere Aufnahmestelle aufgetragen werden kann, bedarf es keiner besonderen Sorgfalt und keiner besonderen Vorkehrungen, um negative Auswirkungen der Schwerkraft zu vermeiden. Vielmehr hilft die Schwerkraft sogar mit, das Medium in seiner Länge zu halten, in welcher die Messung erfolgen soll. Es genügt, den lösbaren Reflektor abzunehmen, die Probe aufzutragen und den Reflektor wieder in seine Gebrauchsstellung zu bringen, um dann die Messung durchführen zu können. Das Auftropfen einer Probe beispielsweise mit Hilfe einer Pipette ist dabei ein äußerst einfach durchführbarer Vorgang.

Der Reflektor kann ein Spiegel oder ein reflektierendes Prisma sein und kann die Probe in Gebrauchsstellung abstandslos berühren. Entsprechend effektiv wird die Probe von dem Licht durchstrahlt und von dem Reflektor zurückgelenkt, um über die zweite Einrichtung zur Umlenkung zu dem eigentlichen Detektor zu gelangen. Die Messstrecke durch die Probe kann dabei doppelt so groß wie der Abstand der Aufnahmefläche von der Oberfläche des Reflektors sein und das Licht kann diesen Abstand zweimal durchlaufen, wie vorstehend schon erwähnt.

Für eine gleichbleibende Genauigkeit der Messungen und für die Vermeidung von Veränderungen der Messbedingungen zwischen den einzelnen Messungen sowie gegenüber Referenzmessungen ist es besonders zweckmäßig, wenn der lösbar aufsetzbare oder anbringbare Reflektor oder ein ihn haltender Deckel gegenüber der Vorrichtung und ihrem Gehäuse in Gebrauchsstellung drehfest gehalten und zentriert ist. Dadurch wird sichergestellt, dass er immer in der selben Position relativ zu der Vorrichtung und ihrem Gehäuse und somit auch zu der Aufnahmestelle angebracht wird, nachdem eine Probe aufgetragen wurde. Entsprechend übereinstimmend sind die jeweiligen Reflektionsbedingungen.

Dabei sind unterschiedliche konstruktive Möglichkeiten vorhanden, die Drehfestigkeit sicherzustellen, obwohl der Reflektor aus seiner Gebrauchslage abgenommen werden kann.

Damit der Reflektor in Gebrauchsstellung in wiederholbarer Weise den vorgegebenen Abstand zu der Aufnahmestelle erhält, kann dieser Abstand durch wenigstens einen Abstandhalter zwischen Reflektor oder Deckel und Gehäuse oder durch einen Anschlag festgelegt sein. Somit besteht für einen Benutzer nicht die Notwendigkeit, beim Aufsetzen des Reflektors beziehungsweise des Deckels mit dem Reflektor auf die Vorrichtung in seine Gebrauchslage Vorkehrungen für die Einhaltung des vorgegebenen Abstands zu treffen. Auch die Ausbildung des Abstandhalters oder eines Anschlages kann auf unterschiedliche Weise konstruktiv gelöst sein. Dabei ist unter Umständen sogar denkbar, dass der Abstandhalter und die Halterung für die Drehfestigkeit des Reflektors miteinander kombiniert sind.

Zwar kann die Einstrahlung von Licht an der Vorrichtung beliebig erfolgen und auch die Detektion kann in geeigneter Weise mit dem Lichtaustritt aus der Vorrichtung zusammenwirken, wobei beliebige Messvorrichtungen verwendbar sind.

Besonders zweckmäßig ist es jedoch, wenn die Vorrichtung die Außenabmessung einer in ein Fotometer, Spektralfotometer, Fluorimeter oder Spektralfluorimeter passend einsetzbaren, von deren Licht beaufschlagbaren Küvette aufweist und wenn die in dem Inneren der Vorrichtung angeordneten Einrichtungen zur Lichtzuleitung oder Lichtumlenkung an der Stelle der Vorrichtung angeordnet sind, an welcher bei üblichen Küvetten Eintritts- und Austrittsfenster für das zur Messung dienende Licht vorgesehen sind, wobei die erste Einrichtung zur Lichtumlenkung das von dem Fotometer eingestrahlte Licht zu der Aufnahmefläche umlenkt und die zweite Einrichtung zur Lichtumlenkung das von der Messstelle zurückkommende Licht zu dem Detektor umlenkt. Durch eine geschickte Wahl der Abmessungen der erfindungsgemäßen Vorrichtung kann diese also in die gängigen Fotometer, Spektralfotometer, Fluorimeter oder Spektralfluorimeter eingesetzt werden, um dort zur Messung auch mengenmäßig sehr kleiner Proben eines Mediums dienen zu können. Dies vermindert vor allem die Investitions- und Installationskosten beträchtlich.

Lichteintritt und Lichtaustritt entsprechen auf diese Weise denen einer handelsüblichen Küvette, so dass die Zuleitung des Lichts und auch dessen Detektion nach dem Durchstrahlen der Probe sehr einfach vor allem in entsprechenden schon existierenden Messvorrichtungen durchgeführt werden kann.

Beispielsweise kann das Außenmaß des Querschnitts der Vorrichtung dem einer Standardküvette entsprechen und insbesondere 12,5 Millimeter mal 12,5 Millimeter betragen.

Es sei noch erwähnt, dass der aus der Vorrichtung wieder austretende Lichtstrahl mit dem eintretenden Lichtstrahl fluchten oder mit diesem einen rechten Winkel einschließen kann. Letzteres ist vor allem bei Fluorimetern oder Spektralfluorimetern zweckmäßig.

Vor allem bei Kombination einzelner oder mehrerer der vorbeschriebenen Merkmale und Maßnahmen ergibt sich eine eingangs definierte Vorrichtung, die eine einfache Handhabung und eine Untersuchung auch sehr kleiner Mengen eines flüssigen Mediums erlaubt unabhängig von dessen Viskosität. Auch Medien relativ hoher Viskosität können gut untersucht werden, da sie problemlos auf der im Wesentlichen horizontalen Aufnahmefläche gehalten werden können. Ferner ist die Reinigung nach erfolgter Messung sehr einfach und kann beispielsweise mit Hilfe von Optik-Reinigungstüchern oder mit Tupfern durchgeführt werden. Gegebenenfalls können dabei übliche Reinigungsmittel zum Einsatz kommen. Günstig ist dabei, dass die von dem untersuchten Medium beaufschlagte Messstelle sehr einfach zugänglich ist, wobei die Vorrichtung sogar in dem Messgerät verbleiben kann.

Insgesamt ergibt sich eine Vorrichtung, die vor allem bei einer Ausbildung mit küvettenähnlichen Abmessungen in die meisten kommerziell verfügbaren Messgeräte und dabei auch in ältere Messgeräte ohne Modifikation eingesetzt werden kann. Dabei kann die Vorrichtung aufgrund der günstigen Lichtführung eine optimierte und verminderte Bauhöhe haben, dass heißt die Bauhöhe kann gegenüber der Vorrichtung, die in DE 10 2004 023 178.8 dargestellt ist, eine beispielsweise etwa 5% bis etwa 20% oder 25% geringere Bauhöhe haben. Referenzmessung, Probemessung und Reinigung können mit geringem Aufwand und ohne nennenswerten Zeitverlust zügig durchgeführt werden.

Aus dem Stand der Technik seien ferner folgende Dokumente genannt:
EP-A 1-660106 beschreibt ein Spektralphotometer mit Lichtleitern, Prismen oder Spiegeln und einem Aufnahmeschacht für eine Messküvette. Dieses Spetralphotometer ist besonders für entfernte Messung geeignet.
DE9403540-U beschreibt eine Tauchsonde mit Glasfasern und einem austauschbaren Messkopf mit einem reflektierenden Element zur Bestimmung der optischen Eigenschaften einer Flüssigkeit durch Transmissions- oder Absorptionsmessung.
US4707134 beschreibt einen Testkopf mit Glasfasern welcher für die Messung der Intensität des von Teilchen gestreuten Lichts in einer transparenten Flüssigkeit anwendbar ist.

Nachstehend sind Ausführungsbeispiele der Erfindung anhand der Zeichnung näher beschrieben. Es zeigt in zum Teil schematisierter Darstellung:

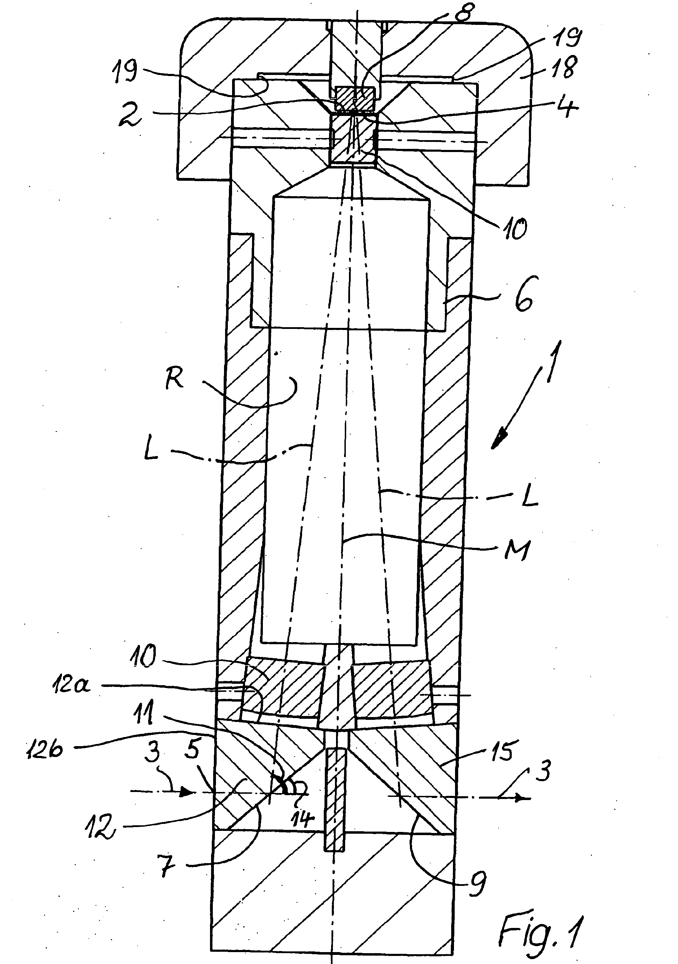

- Fig. 1: einen Längsschnitt einer erfindungsgemäßen Vorrichtung mit einem Gehäuse, in welches ein Lichtstrahl horizontal eintritt und durch eine erste Einrichtung schräg nach oben umgelenkt wird, wobei eine obere flächige Aufnahmestelle zum Auftragen des zu untersuchenden Mediums vorgesehen ist, über der sich ein lösbar anbringbarer Reflektor befindet, von welchem das Licht zurück zu einer zweiten Einrichtung zum Umlenken des Lichts wieder aus der Vorrichtung heraus befindet, wobei das Licht innerhalb des Gehäuses der Vorrichtung weitestgehend durch einen freien Raum strahlt, sowie

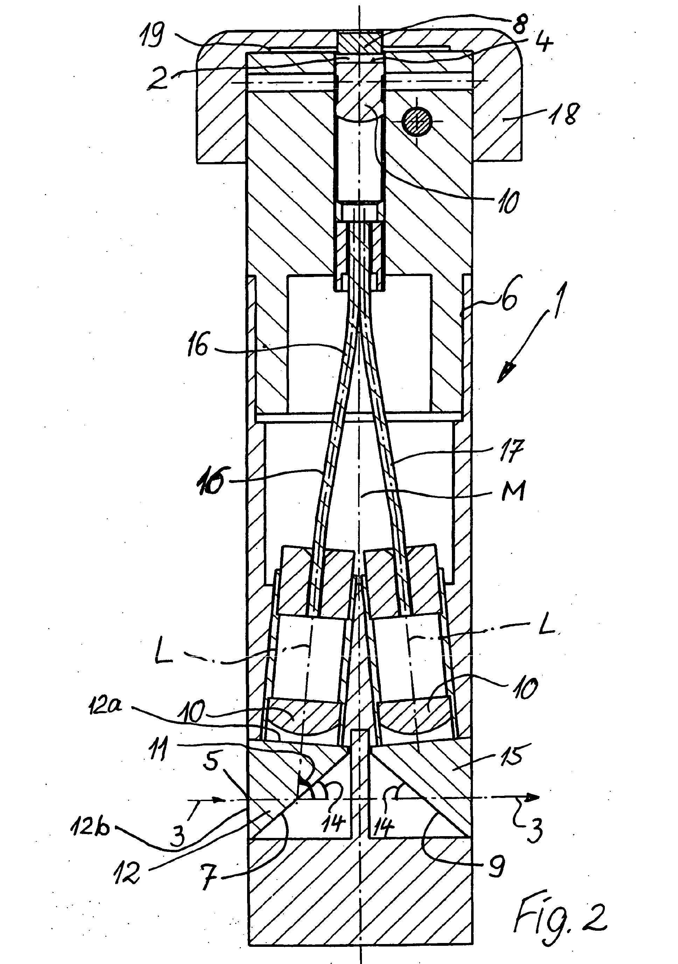

- Fig. 2: eine der Fig.1 entsprechende Darstellung eines abgewandelten Ausführungsbeispiels, bei welchem das Licht innerhalb des Gehäuses der Vorrichtung über einen großen Teil der Höhe durch Lichtleiter geführt ist.

In der nachfolgenden Beschreibung erhalten hinsichtlich ihrer Funktion übereinstimmende Teile der unterschiedlichen Ausführungsbeispiele auch bei abgewandelter Formgebung übereinstimmende Bezugszahlen.

Eine im Ganzen mit 1 bezeichnete Vorrichtung, deren Gehäuse 6 und damit auch deren Gehäuseinhalt in Fig.1 und 2 im Längsschnitt dargestellt sind, dient der Analyse oder Absorptionsmessung an sehr kleinen Mengen, beispielsweise an einem Tropfen oder einem Bruchteil eines Tropfens eines flüssigen Mediums 2 mit Hilfe von durch Pfeile 3 symbolisiertem Licht, wobei von einem entsprechenden Lichtstrahl dessen optische Achse durch schräg zur Mitte M verlaufende strichpunktierte Linien L angedeutet ist.

Dieses Licht wird durch das Medium 2 geführt und danach fotometrisch, spektralfotometrisch, fluorimetrisch oder spektralfluorimetrisch in an sich bekannter Weise detektiert oder analysiert. Dabei zeigen beide Ausführungsbeispiele, dass die Vorrichtung 1 eine in Gebrauchsstellung obere flächige, im wesentlichen horizontale und weitgehend ebene Aufnahmestelle 4 zum Aufbringen oder Auftropfen des Mediums 2, einen in Gebrauchsstellung horizontal orientierten, unterhalb der Aufnahmestelle 4 befindlichen Lichteintritt 5 in ihr Gehäuse 6 und eine im Strahlengang hinter dem Lichteintritt 5 befindliche erste Einrichtung 7 zum Umlenken des Lichts nach oben zu der Aufnahmestelle 4 sowie einen oberhalb der Aufnahmestelle 4 lösbar anbringbaren Reflektor 8 aufweist.

Dabei hat dieser Reflektor 8 in Gebrauchsstellung einen definierten Abstand von der Aufnahmestelle 4, um eine gleichbleibende präzise Messstrecke für das Licht zu ergeben. Dieser Abstand ist im Bereich des Lichtdurchgangs von dem Medium 2 ausgefüllt oder ausfüllbar.

Ferner weist die Vorrichtung 1 eine zweite Einrichtung 9 zum Umlenken des von dem Reflektor 8 kommenden Lichts zu einem Detektor auf, der in Fig.1 und 2 nicht näher dargestellt ist.

Dabei ist die am Lichteintritt 5 angeordnete erste Einrichtung 7 zum Umlenken des Lichtstrahls in beiden Ausführungsbeispielen so ausgebildet, dass die dadurch bewirkte Richtung der optischen Achse - also der Linie L - des umgelenkten Lichtstrahls schräg aufwärts zur Mitte der Vorrichtung 1 hin orientiert ist, wobei die Schrägstellung der optischen Achse dabei gegenüber der Vorrichtungsmitte M so angeordnet ist, dass die optische Achse des Lichtstrahls oder Lichtstrahlbündels ohne (Fig.1) oder mit Hilfe eines optischen Elements (Fig.2) auf die Stelle des Reflektors 8 gerichtet ist, durch welche etwa die Längsmitte M der Vorrichtung 1 zwischen Lichteintritt 5 und Lichtaustritt verläuft. Von der Umlenkung des Lichts wird dieses also praktisch auf kürzestem Weg zu der Aufnahmestelle 4 und der Probe geleitet, sei es durch einen freien Raum innerhalb des Gehäuses 6, sei es durch ein optisches Element, welches gemäß Figur 2 ein Lichtleiter 16 sein kann.

Dabei erkennt man in beiden Figuren, dass vor und nach dem Eintritt des umgelenkten Lichtstrahls in den freien, von ihm durchsetzten Raum (Fig.1) oder einen Lichtleiter 9 ein optisches Element als Fenster und/oder zur Bündelung des Lichtstrahls, beispielsweise eine Sammellinse 10 vorgesehen ist. Dadurch kann der Lichtstrahl besser gebündelt und genauer auf die Probe gerichtet werden. In beiden Ausführungsbeispielen ist vorgesehen, dass die optische Achse des Lichtstrahls 3 vor und am Lichteintritt 5 in das Gehäuse 6 horizontal verläuft und dass die erste Einrichtung 7 zum Umlenken des Lichtstrahls dessen optische Achse L um weniger als 90°, beispielsweise etwa um 85° nach oben umlenkt. Dieser Umlenkwinkel ist in den Figuren mit der Bezugszahl 11 versehen. Dabei ist im Bereich des Lichteintritts 5 als erste Einrichtung 7 zum Umlenken ein Umlenkprisma 12 oder gegebenenfalls auch ein Umlenkspiegel vorgesehen, wobei die jeweilige Reflektionsfläche 7 gegenüber der optischen Achse des einfallenden Lichtstrahls einen kleineren Winkel 14 als 45° hat. Die Abweichung dieses Winkels 14 von 45° ist dabei halb so groß wie die Abweichung des Winkels 11 von 90°.

An dem Prisma 12 ist diejenige Fläche 12a, durch welche der Lichtstrahl nach der Umlenkung schräg nach oben austritt, rechtwinklig zur optischen Achse L dieses umgelenkten Lichtstrahls orientiert, wie es in beiden Figuren gut zu erkennen ist. Da die am Lichteintritt befindliche Prismenfläche 12b senkrecht zu dem eintretenden Lichtstrahl 3 und damit genau vertikal angeordnet ist, ergibt sich also zwischen der Prismenfläche 12a und dieser am Lichteintritt 5 befindlichen Prismenfläche 12b ein kleinerer Winkel als 90°, dessen Größe dabei der des Winkels 11 entspricht.

Am Lichtaustritt ist als zweite Einrichtung 9 zur Umlenkung des von der Probe kommenden, symmetrisch zur Mitte M schräg verlaufenden Lichtstrahls wiederum ein Umlenkprisma 15 - oder gegebenenfalls ein Umlenkspiegel - vorgesehen, wobei diese zweite Einrichtung 9 spiegelsymmetrisch zur Mitte M der Vorrichtung 1 zwischen Ein- und Austritt angeordnet ist, so dass die optische Achse L eines von dem Reflektor 8 ausgehenden, schräg zu dieser zweiten Einrichtung 9 verlaufenden Lichtstrahls am oder hinter dem Lichtaustritt, wie in beiden Figuren erkennbar, wieder horizontal verläuft. Die optische Achse des umgelenkten Lichtstrahls verläuft also nach der Umlenkung auf dem kürzest möglichen Weg zu der Aufnahmestelle 4 beziehungsweise der dort befindlichen Probe und dem darüber angeordneten Reflektor 8, so dass eine entsprechend geringe Gesamthöhe der Vorrichtung 1 ermöglichst wird.

In beiden Ausführungsbeispielen ist vorgesehen, dass die Aufnahmestelle 4 als Fläche ausgebildet und von oben zugänglich ist, das zu untersuchende Medium 2 also durch seine Schwerkraft auf diese Aufnahmestelle gehalten wird. Dabei ist die Aufnahmestelle 4 so groß bemessen, dass das durch sie hindurch zu dem Reflektor 8 verlaufende und von diesem zurückgeworfene Licht zweimal durch die Aufnahmestelle 4 und durch das Medium hindurchgeführt wird. Dadurch wird erreicht, dass die Messstrecke durch die von dem Medium 2 gebildete Probe doppelt so groß wie der Abstand der Aufnahmefläche 4 von der Oberfläche des Reflektors 8 ist und das Licht diesen Abstand zweimal durchläuft. Die Messstrecke ist auf diese Weise doppelt so groß wie der erwähnte Abstand.

Im Ausführungsbeispiel gemäß Fig.1 verläuft das Licht von der ersten Einrichtung 7 nach seiner Umlenkung praktisch ungehindert durch einen freien Raum R innerhalb des Gehäuses 6 zu der Probe 2 und nach der Reflektion vom Reflektor 8 in gleicher Weise wieder zurück zu der zweiten Einrichtung 9.

Im Ausführungsbeispiel gemäß Fig.2 wird das Lichtbündel jedoch durch Lichtleiter 16 und 17 geführt und dadurch in seinem Querschnitt zusammengehalten. Jeweils unmittelbar nach der Umlenkung und vor der Aufnahmestelle 4 befindet sich aber die bereits erwähnte, das Licht bündelnde Sammellinse 10 beziehungsweise ein entsprechendes optisches Fenster, wobei dann auch wieder bei dem zurückgestrahlten Licht vor der zweiten Einrichtung 9 eine solche Sammellinse 10 vorgesehen ist.

Die Aufnahmestelle 4 ist in beiden Ausführungsbeispielen gegenüber der oberen, durch den Reflektor 8 oder einen ihn haltenden Deckel 18 überdeckten Stirnseite des Gehäuses 6 abgesenkt, so dass die Begrenzungen dieser Absenkung gleichzeitig die Aufnahmestelle 4 begrenzen und dadurch dazu beitragen, dass schon eine ganz geringe Menge einer Probe aufgenommen und untersucht werden kann.

Der Reflektor 8 kann ein Spiegel oder ein reflektierendes Prisma sein und die Probe des Mediums 2 in Gebrauchsstellung abstandslos berühren. Wie erwähnt, ist dann die Messstrecke durch die Probe doppelt so groß wie der Abstand der Aufnahmestelle 4 von der Oberfläche des Reflektors 8 und das Licht durchläuft diesen Abstand zur Bildung der gesamten Messstrecke zweimal.

Der lösbar aufsetzbare oder anbringbare Reflektor 8 beziehungsweise der ihn gemäß Fig.1 und 2 haltende Deckel 18 ist gegenüber der Vorrichtung 1 und ihrem Gehäuse 6 in Gebrauchsstellung drehfest gehalten und zentriert. Der Abstand des Reflektors 8 von der Aufnahmestelle 4 wird dabei durch Abstandhalter 19 zwischen Reflektor 8 und Gehäuse 6 oder - in beiden Ausführungsbeispielen - zwischen dem den Reflektor 8 haltenden Deckel 18 und dem Gehäuse 6 festgelegt. Dabei kann dieser Abstandhalter 19 zweckmäßigerweise ringförmig umlaufen, um einen gleichmäßigen Abstand einzuhalten.

Die Vorrichtung 1 hat zweckmäßigerweise die Außenabmessung einer in ein Fotometer, Spektralfotometer, Fluorimeter oder Spektralfluorimeter passend einsetzbaren, von deren Licht beaufschlagbaren Küvette und die in dem Inneren der Vorrichtung 1 angeordneten Einrichtungen 7 und 9 zur Lichtumlenkung sind dabei an der Stelle angeordnet, bei welcher bei üblichen Küvetten Eintritts- und Austrittsfenster für das zur Messung dienende Licht vorgesehen sind. Die erste Einrichtung 7 zur Lichtumlenkung lenkt dabei das von dem Fotometer oder dergleichen eingestrahlte Licht zu der Aufnahmestelle 4 hin um, während die zweite Einrichtung 9 zur Lichtumlenkung des von dieser Messstelle zurückkommenden Lichts zu dem Detektor dient. Das Außenmaß des Querschnitts der Vorrichtung 1 entspricht also dem einer Standardküvette und beträgt beispielsweise 12,5 mm x 12,5 mm.

Dadurch ergibt sich, wie in den Figuren ersichtlich, dass die optische Achse L des austretenden Lichtstrahls mit der des eintretenden Lichtstrahls 3 fluchtet, jedoch könnten diese beiden Bereiche des Lichtstrahls auch einen rechten Winkel einschließen, wenn die beiden Einrichtungen 7 und 9 entsprechend gegeneinander verdreht angeordnet sind.

Die Vorrichtung 1 für die Analyse oder Absorptionsmessung an einer kleinen Menge, beispielsweise an einem Tropfen oder an einem Tröpfchen eines flüssigen Mediums 2 mit Hilfe von Licht 3 hat eine obere flächige Aufnahmestelle 4 zum Aufbringen oder Auftropfen des Mediums 2 und einen in Gebrauchsstellung unterhalb dieser Aufnahmestelle oder Aufnahmefläche 4 befindlichen Lichteintritt 5 in das Gehäuse 6 sowie im Strahlengang hinter diesem Lichteintritt 5 eine erste Einrichtung 7 zur Umlenkung des Lichts nach oben zu der Aufnahmestelle 4 hin, wo sich auch ein lösbar anbringbarer Reflektor 8 befindet. Dabei ist die Einrichtung 7 zum Umlenken des Lichtstrahls so ausgebildet, dass die Richtung der optischen Achse des umgelenkten Lichtstrahls aufwärts und zur Mitte M der Vorrichtung 1 hin orientiert und die Schrägstellung der optischen Achse des Lichtstrahls dabei gegenüber der Vorrichtungsmitte M so angeordnet ist, dass sie auf die Stelle des Reflektors 8 gerichtet ist, durch welche die Längsmitte M zwischen Lichteintritt 5 und Lichtaustritt der Vorrichtung 1 verläuft. Entsprechend geringer kann die Bauhöhe der Vorrichtung 1 gegenüber einer solchen sein, bei welcher das Licht zunächst um einen rechten Winkel umgelenkt und danach erst über eine weitere Richtungsänderung auf die Aufnahmestelle oder Probe gerichtet wird.

## Patentansprüche

1. Vorrichtung (1) für die Analyse oder Absorptionsmessung an einer kleinen Menge, beispielsweise an einem Tropfen, eines flüssigen Mediums (2) mit Hilfe von Licht (3), das durch das Medium (2) geführt ist und danach fotometrisch, spektralfotometrisch, fluorimetrisch oder spektralfluorimetrisch detektierbar oder analysierbar ist, wobei die Vorrichtung (1) eine in Gebrauchsstellung obere flächige Aufnahmestelle (4) zum Aufbringen oder Auftropfen des Mediums (2), einen in Gebrauchsstellung unterhalb der Aufnahmestelle (4) befindlichen Lichteintritt (5) in ihr Gehäuse (6) und eine im Strahlengang hinter dem Lichteintritt (5) befindliche erste Einrichtung (7) zur Umlenkung des Lichts nach oben zu der Aufnahmestelle (4) und einen oberhalb der Aufnahmestelle (4) lösbar anbringbaren Reflektor (8) aufweist, der in seiner Gebrauchsstellung einen definierten Abstand von der Aufnahmestelle (4) hat und zumindest im Bereich des Lichtdurchganges von dem Medium (2) ausgefüllt oder ausfüllbar ist, wobei eine zweite Einrichtung (9) zum Umlenken des von dem Reflektor (8) kommenden Lichts zu einem Detektor vorgesehen ist, **dadurch gekennzeichnet, dass** die am Lichteintritt (5) angeordnete erste Einrichtung (7) zum Umlenken des Lichtstrahls so ausgebildet ist, dass die dadurch bewirkte Richtung der optischen Achse des umgelenkten Lichtstrahls aufwärts und schräg zur Mitte (M) der Vorrichtung (1) hin orientiert und die Schrägstellung der optischen Achse dabei gegenüber der Vorrichtungsmitte (M) so angeordnet ist, dass die optische Achse des Lichtstrahls oder Lichtstrahlbündels ohne oder mit Hilfe wenigstens eines optischen Elements auf die Stelle des Reflektors (8) gerichtet ist, durch welche die Längsmitte (M) zwischen Lichteintritt (5) und Lichtaustritt der Vorrichtung (1) verläuft.

2. Vorrichtung nach Anspruch 1, **dadurch gekennzeichnet, dass** als optisches Element für den umgelenkten Lichtstrahl zum Reflektor (8) und dann vom Reflektor (8) zum Lichtaustritt oder zu einer am Lichtaustritt befindlichen zweiten Einrichtung zum Umlenken des Lichtstrahls wenigstens eine Linse und/oder ein Prisma und/oder ein Lichtleiter (16; 17) vorgesehen sind.

3. Vorrichtung nach Anspruch 1, **dadurch gekennzeichnet, dass** der Lichtstrahl von der Umlenkung aus ungeführt oder ungeleitet zu der Aufnahmestelle (4) verläuft.

4. Vorrichtung nach einem der Ansprüche 1 bis 3, **dadurch gekennzeichnet, dass** vor und/oder nach dem Eintritt des umgelenkten Lichtstrahls in den freien, von ihm durchsetzten Raum (R) oder einen Lichtleiter (9) ein optisches Element als Fenster und/oder zur Bündelung des Lichtstrahls, beispielsweise eine Sammellinse (10) vorgesehen ist.

5. Vorrichtung nach einem der Ansprüche 1 bis 4, **dadurch gekennzeichnet, dass** die optische Achse des Lichtstrahls (3) vor und/oder am Lichteintritt (5) in das Gehäuse (6) horizontal verläuft und dass die erste Einrichtung (7) zum Umlenken des Lichtstrahls dessen optische Achse (L) um weniger als 90°, insbesondere um etwa 80° bis 89°, vorzugsweise um etwa 85°, nach oben umlenkt.

6. Vorrichtung nach einem der Ansprüche 1 bis 5, **dadurch gekennzeichnet, dass** im Bereich des Lichteintritts (5) als erste Einrichtung (7) zur Umlenkung ein Umlenkprisma (12) oder ein Umlenkspiegel vorgesehen ist, dessen Reflektionsfläche (13) gegenüber der optischen Achse des einfallenden Lichtstrahls einen kleineren Winkel (14) als 45° hat.

7. Vorrichtung nach einem der Ansprüche 1 bis 6, **dadurch gekennzeichnet, dass** an dem Prisma (12) diejenige Fläche (12a), durch welche der Lichtstrahl nach der Umlenkung austritt, rechtwinklig zu diesem umgelenkten Lichtstrahl beziehungsweise zu seiner optischen Achse (L) orientiert ist und mit einer am Lichteintritt (5) befindlichen Prismenfläche (12b) einen kleineren Winkel als 90°, beispielsweise etwa 80° bis 89°, vorzugsweise etwa 85° bildet.

8. Vorrichtung nach einem der Ansprüche 1 bis 7, **dadurch gekennzeichnet, dass** am Lichtaustritt als zweite Einrichtung (9) zur Umlenkung ein Umlenkprisma (15) oder Umlenkspiegel vorgesehen ist, und dass die zweite Einrichtung (9) spiegelsymmetrisch zur Mitte (M) der Vorrichtung (1) zwischen Ein- und Austritt angeordnet ist, so dass die optische Achse (L) eines von dem Reflektor (8) ausgehenden, schräg verlaufenden Lichtstrahls am oder hinter dem Lichtaustritt horizontal verläuft.

9. Vorrichtung nach einem der Ansprüche 1 bis 8, **dadurch gekennzeichnet, dass** die Aufnahmestelle (4) von oben bei insbesondere abgenommenem Reflektor zugänglich und das zu untersuchende Medium durch Schwerkraft auf der Aufnahmestelle (4) festlegbar oder gehalten ist.

10. Vorrichtung nach einem der Ansprüche 1 bis 9, **dadurch gekennzeichnet, dass** die Aufnahmestelle (4) so groß bemessen ist, dass das durch sie hindurch zu dem Reflektor (8) verlaufende und von diesem zurückgeworfene Licht (3) wenigstens einmal, insbesondere zweimal durch die Aufnahmestelle (4) und/oder durch das Medium (2) geführt ist.

11. Vorrichtung nach einem der Ansprüche 1 bis 10, **dadurch gekennzeichnet, dass** die Aufnahmestelle (4) gegenüber der oberen durch den Reflektor (8) oder einen Deckel (18) überdeckten Stirnseite des Gehäuses (6) abgesenkt ist und die Begrenzungen dieser Absenkung die Aufnahmestelle (4) begrenzen.

12. Vorrichtung nach einem der Ansprüche 1 bis 11, **dadurch gekennzeichnet, dass** der Reflektor (8) ein Spiegel oder ein reflektierendes Prisma ist und die Probe des Mediums (2) in Gebrauchsstellung abstandslos berührt.

13. Vorrichtung nach einem der Ansprüche 1 bis 12, **dadurch gekennzeichnet, dass** die Messstrecke durch die Probe doppelt so groß wie der Abstand der Aufnahmestelle (4) von der Oberfläche des Reflektors (8) ist und das Licht diesen Abstand zur Bildung der gesamten Messstrecke zweimal durchläuft.

14. Vorrichtung nach einem der Ansprüche 1 bis 13, **dadurch gekennzeichnet, dass** der lösbar aufsetzbare oder anbringbare Reflektor (8) oder der ihn haltende Deckel (18) gegenüber der Vorrichtung (1) und ihrem Gehäuse (6) in Gebrauchsstellung drehfest gehalten und insbesondere zentriert ist.

15. Vorrichtung nach einem der Ansprüche 1 bis 14, **dadurch gekennzeichnet, dass** der Abstand des Reflektors (8) von der Aufnahmestelle (4) durch wenigstens einen Abstandhalter (19), der zwischen Reflektor (8) oder Deckel (18) und Gehäuse (6) angeordnet ist, oder durch wenigstens einen Anschlag festgelegt ist.

16. Vorrichtung nach einem der vorstehenden Ansprüche, **dadurch gekennzeichnet, dass** die Vorrichtung (1) die Außenabmessung einer in ein Fotometer, Spektralfotometer, Fluorimeter oder Spektralfluorimeter passend einsetzbaren, von deren Licht beaufschlagbaren Küvette aufweist und dass die in dem Inneren der Vorrichtung (1) angeordneten Einrichtungen (7, 9) zur Lichtzuleitung oder Lichtumlenkung an der Stelle der Vorrichtung (1) angeordnet sind, an welcher bei üblichen Küvetten Eintritts- und Austrittsfenster für das zur Messung dienende Licht (3) vorgesehen sind, wobei die erste Einrichtung (7) zur Lichtumlenkung das von dem Fotometer oder dergleichen eingestrahlte Licht zu der Aufnahmefläche (4) umlenkt und die zweite Einrichtung (9) zur Lichtumlenkung das von der Messstelle zurückkommende Licht zu dem Detektor umlenkt.

17. Vorrichtung nach einem der Ansprüche 1 bis 16, **dadurch gekennzeichnet, dass** das Außenmaß des Querschnitts der Vorrichtung (1) dem einer Standard-Küvette entspricht und insbesondere 12,5 mm x 12,5 mm beträgt.

18. Vorrichtung nach einem der Ansprüche 1 bis 17, **dadurch gekennzeichnet, dass** die optische Achse (2) des austretenden Lichtstrahls (3) mit der des eintretenden Lichtstrahls fluchtet oder einen rechten Winkel einschließt.

## Claims

1. Apparatus (1) for analysis or absorption measurement on a small amount, for example one drop, of a liquid medium (2) using light (3) that is passed through the medium (2) and can then be detected or analysed by means of a photometer, spectrophotometer, fluorimeter or spectrofluorimeter, the apparatus (1) having a planar receiving point (4) which is on top in the position of use for applying or adding drops of the medium (2), a light entry point (5) into the housing (6) located underneath the receiving point (4) in the position of use, and a first device (7) located behind the light entry point (5) in the beam path, for guiding the light upwards to the receiving point (4), and a reflector (8) that can be releasably mounted above the receiving point (4), which is at a defined distance from the receiving point (4) in its position of use and is filled or capable of being filled with the medium (2) at least in the region of the passage of light, a second device (9) being provided for guiding the light coming from the reflector (8) to a detector, **characterised in that** the first device (7) arranged at the light entry point (5) for deflecting the light beam is designed such that the direction of the optical axis of the deflected light beam thus obtained is oriented upwards and diagonally towards the centre (M) of the apparatus (1) and the inclined position of the optical axis relative to the centre (M) of the device is arranged such that, with or without the aid of at least one optical element, the optical axis of the light beam or pencil of light is directed onto the point of the reflector (8) through which the central longitudinal line (M) extends between the light entry point (5) and light exit point of the apparatus (1).

2. Apparatus according to claim 1, **characterised in that** at least one lens and/or a prism and/or a light guide (16; 17) is or are provided as the optical element for the deflected light beam to the reflector (8) and then from the reflector (8) to the light exit point or to a second device located at the light exit point for deflecting the light beam.

3. Apparatus according to claim 1, **characterised in that**, once it has been deflected, the light beam extends unguided or undirected to the receiving point (4).

4. Apparatus according to one of claims 1 to 3, **characterised in that** before and/or after the deflected light beam has entered the free space (R) through which it passes or a light guide (9), an optical element is provided as a window and/or for focussing the beam of light, for example a converging lens (10).

5. Apparatus according to one of claims 1 to 4, **characterised in that** the optical axis of the light beam (3) extends horizontally before and/or at the light entry point (5) into the housing (6) and the first device (7) for deflecting the light beam deflects its optical axis (L) through less than 90°, in particular through about 80° to 89°, preferably through about 85°.

6. Apparatus according to one of claims 1 to 5, **characterised in that** in the region of the light entry point (5) a deflecting prism (12) or a deflecting mirror is provided as the first device (7), the reflecting surface (13) of which forms an angle (14) of less than 45° with the optical axis of the incident light beam.

7. Apparatus according to one of claims 1 to 6, **characterised in that** on the prism (12) the surface (12a) through which the light beam exits after deflection is oriented at right angles to this deflected light beam or to its optical axis (L) and forms an angle of less than 90°, for example about 80° to 89°, preferably about 85°, with a prism surface (12b) located at the light entry point (5).

8. Apparatus according to one of claims 1 to 7, **characterised in that** at the light exit point a deflecting prism (15) or deflecting mirror is provided as the second deflecting device (9), and **in that** the second device (9) is arranged mirror-symmetrically with respect to the centre (M) of the apparatus (1) between the entry and exit points, so that the optical axis (L) of a diagonally extending light beam proceeding from the reflector (8) extends horizontally at or behind the light exit point.

9. Apparatus according to one of claims 1 to 8, **characterised in that** the receiving point (4) is accessible from above when the reflector is removed in particular and the medium that is to be investigated can be secured or is held on the receiving point (4) by gravity.

10. Apparatus according to one of claims 1 to 9, **characterised in that** the receiving point (4) is of such dimensions that the light (3) extending through it to the reflector (8) and reflected by it is passed at least once and more particularly twice through the receiving point (4) and/or through the medium (2).

11. Apparatus according to one of claims 1 to 10, **characterised in that** the receiving point (4) is lowered relative to the end face of the housing (6) that is covered at the top by the reflector (8) or a cover (18) and the boundaries of this lowered part define the receiving point (4).

12. Apparatus according to one of claims 1 to 11, **characterised in that** the reflector (8) is a mirror or a reflecting prism and touches the sample of medium (2) directly in the position of use.

13. Apparatus according to one of claims 1 to 12, **characterised in that** the measurement distance through the sample is twice as great as the spacing of the receiving point (4) from the surface of the reflector (8) and the light travels through this distance twice to form the overall measurement distance.

14. Apparatus according to one of claims 1 to 13, **characterised in that** the reflector (8) that can be releasably positioned or mounted, or the cover (18) that holds it, is held non-rotatably and more particularly is centred relative to the apparatus (1) and its housing (6) in the position of use.

15. Apparatus according to one of claims 1 to 14, **characterised in that** the spacing of the reflector (8) from the receiving point (4) is fixed by at least one spacer (19) which is arranged between the reflector (8) or cover (18) and housing (6), or by at least one stop.

16. Apparatus according to one of the preceding claims, **characterised in that** the apparatus (1) has the outer dimensions of a vessel that can be fitted into a photometer, spectrophotometer, fluorimeter or spectrofluorimeter and can be acted upon by the light therefrom, and **in that** the devices (7, 9) arranged inside the apparatus (1) for supplying light or deflecting light are arranged at the place in the apparatus (1) where, in conventional vessels, entry and exit windows are provided for the light (3) that is used for the measurement, the first light-deflecting device (7) deflecting the light that is irradiated in from the photometer or the like to the receiving surface (4) and the second light-deflecting device (9) deflecting the light returning from the measuring point to the detector.

17. Apparatus according to one of claims 1 to 16, **characterised in that** the external dimensions of the cross-section of the apparatus (1) correspond to those of a standard vessel and are in particular 12.5 mm x 12.5 mm.

18. Apparatus according to one of claims 1 to 17, **characterised in that** the optical axis (2) of the outgoing light beam (3) is aligned with that of the incoming light beam or encloses a right angle therewith.

## Revendications

1. Dispositif (1) pour l'analyse ou la mesure d'absorption d'une petite quantité, par exemple d'une goutte, d'un milieu liquide (2) à l'aide d'une lumière (3) qui est guidée à travers le milieu (2) et peut ensuite être détectée ou analysée par photométrie, spectrophotométrie, fluorimétrie ou spectrofluorimétrie, le dispositif (1) présentant un emplacement de réception plan (4) supérieur en position d'utilisation pour l'application ou le dépôt d'une goutte de milieu (2), une entrée de lumière (5) se trouvant au-dessous de l'emplacement de réception (4) en position d'utilisation dans son boîtier (6), un premier équipement (7) se trouvant derrière l'entrée de lumière (5) dans le chemin optique pour dévier la lumière vers le haut en direction de l'emplacement de réception (4) et un réflecteur (8) pouvant être monté de manière détachable au-dessus de l'emplacement de réception (4), qui dans sa position d'utilisation, est à une distance définie de l'emplacement de réception (4) et, au moins dans la zone de passage de la lumière, est rempli ou peut être rempli par le milieu (2), un deuxième équipement (9) pour dévier la lumière venant du réflecteur (8) vers un détecteur étant prévu, **caractérisé en ce que** le premier équipement (7) disposé à l'entrée de lumière (5) pour dévier le rayon lumineux est conçu de manière que la direction produite par celui-ci de l'axe optique du rayon lumineux dévié soit orientée vers le haut et obliquement par rapport au centre (M) du dispositif (1) et la position oblique de l'axe optique ce faisant disposée par rapport au centre (M) du dispositif de manière que l'axe optique du rayon lumineux ou du faisceau de rayons lumineux soit dirigé avec ou sans l'aide d'au moins un élément optique sur le point du réflecteur (8) par lequel passe le centre longitudinal (M) entre entrée de lumière (5) et sortie de lumière du dispositif (1).

2. Dispositif selon la revendication 1, **caractérisé en ce qu'**au moins une lentille et/ou un prisme et/ou un guide de lumière (16 ; 17) sont prévus comme éléments optiques pour le rayon lumineux dévié vers le réflecteur (8) et ensuite du réflecteur (8) vers la sortie de lumière ou vers un deuxième équipement pour dévier le rayon lumineux se trouvant à la sortie de lumière.

3. Dispositif selon la revendication 1, **caractérisé en ce que** le rayon lumineux s'étend de la déviation vers l'emplacement de réception (4) sans être guidé ni conduit.

4. Dispositif selon une des revendications 1 à 3, **caractérisé en ce qu'**avant et/ou après l'entrée du rayon lumineux dévié dans l'espace libre (R) traversé par lui ou dans un guide de lumière (9), un élément optique, par exemple une lentille convergente (10), est prévu comme fenêtre et/ou pour focaliser le rayon lumineux.

5. Dispositif selon une des revendications 1 à 4, **caractérisé en ce que** l'axe optique du rayon lumineux (3) s'étend horizontalement dans le boîtier (6) avant et/ou à l'entrée de lumière (5) et que le premier équipement (7) pour dévier le rayon lumineux dévie son axe optique (L) vers le haut de moins de 90°, en particulier d'environ 80° à 89°, de préférence d'environ 85°.

6. Dispositif selon une des revendications 1 à 5, **caractérisé en ce que** dans la zone de l'entrée de lumière (5), il est prévu comme premier équipement (7) de déviation un prisme de déviation (12) ou un miroir de déviation dont la surface réfléchissante (13) fait avec l'axe optique du rayon lumineux incident un angle (14) inférieur à 45 °.

7. Dispositif selon une des revendications 1 à 6, **caractérisé en ce que** sur le prisme (12), la surface (12a) par laquelle sort le rayon lumineux après la déviation est orientée perpendiculairement à ce rayon lumineux dévié ou à son axe optique (L) et forme avec une surface de prisme (12b) se trouvant à l'entrée de lumière (5) un angle inférieur à 90°, par exemple d'environ 80° à 89°, de préférence d'environ 85°.

8. Dispositif selon une des revendications 1 à 7, **caractérisé en ce qu'**à la sortie de lumière, il est prévu comme deuxième équipement (9) de déviation un prisme de déviation (15) ou un miroir de déviation, et que le deuxième équipement (9) est disposé symétriquement par rapport au centre (M) du dispositif (1) entre entrée et sortie, de sorte que l'axe optique (L) d'un rayon lumineux d'extension oblique provenant du réflecteur (8) s'étend horizontalement au niveau de ou derrière la sortie de lumière.

9. Dispositif selon une des revendications 1 à 8, **caractérisé en ce que** l'emplacement de réception (4) est accessible par le haut, en particulier lorsque le réflecteur est démonté, et que le milieu à examiner peut être immobilisé ou maintenu sur l'emplacement de réception (4) par gravité.

10. Dispositif selon une des revendications 1 à 9, **caractérisé en ce que** l'emplacement de réception (4) est dimensionné assez grand pour que la lumière (3) s'étendant à travers lui vers le réflecteur (8) et réfléchie par celui-ci soit guidée au moins une fois, en particulier deux fois à travers l'emplacement de réception (4) et/ou à travers le milieu (2).

11. Dispositif selon une des revendications 1 à 10, **caractérisé en ce que** l'emplacement de réception (4) est en contrebas par rapport à la face d'extrémité supérieure du boîtier (6) couverte par le réflecteur (8) ou un couvercle (18) et les frontières de cette partie en contrebas délimitent l'emplacement de réception (4).

12. Dispositif selon une des revendications 1 à 11, **caractérisé en ce que** le réflecteur (8) est un miroir ou un prisme réfléchissant et touche sans distance l'échantillon de milieu (2) en position d'utilisation.

13. Dispositif selon une des revendications 1 à 12, **caractérisé en ce que** le parcours de mesure à travers l'échantillon est deux fois plus grand que la distance entre l'emplacement de réception (4) et la surface du réflecteur (8) et la lumière couvre cette distance deux fois pour former le parcours de mesure total.

14. Dispositif selon une des revendications 1 à 13, **caractérisé en ce que** le réflecteur (8) pouvant être posé ou monté de manière détachable ou le couvercle (18) maintenant le réflecteur est bloqué en rotation et en particulier centré par rapport au dispositif (1) et à son boîtier (6) en position d'utilisation.

15. Dispositif selon une des revendications 1 à 14, **caractérisé en ce que** la distance du réflecteur (8) par rapport à l'emplacement de réception (4) est fixée par au moins un élément d'écartement (19) qui est disposé entre le réflecteur (8) ou le couvercle (18) et le boîtier (6), ou par au moins une butée.

16. Dispositif selon une des revendications précédentes, **caractérisé en ce que** le dispositif (1) possède les dimensions extérieures d'une cuvette qui peut être mise en place dans un photomètre, spectrophotomètre, fluorimètre ou spectrofluorimètre et être soumise à leur lumière et que les équipements (7, 9) disposés à l'intérieur du dispositif (1) pour guider la lumière ou dévier la lumière sont disposés à l'emplacement du dispositif (1) auquel, pour les cuvettes typiques, sont prévues des fenêtres d'entrée et de sortie pour la lumière (3) servant à la mesure, le premier équipement (7) de déviation de lumière déviant la lumière irradiée par le photomètre ou analogue vers la surface réceptrice (4) et le deuxième équipement (9) de déviation de lumière déviant la lumière revenant de la position de mesure vers le détecteur.

17. Dispositif selon une des revendications 1 à 16, **caractérisé en ce que** les dimensions extérieures de la section transversale du dispositif (1) correspondent à celles d'une cuvette standard et en particulier sont égales à 12,5 mm x 12,5 mm.

18. Dispositif selon une des revendications 1 à 17, **caractérisé en ce que** l'axe optique (2) du rayon lumineux (3) émergent est aligné avec celui du rayon lumineux entrant ou forme un angle droit.
